# EUROPÄISCHE PATENTANMELDUNG

(11) **EP 3 211 762 A1**
(43) Veröffentlichungstag der Anmeldung: **30.08.2017**
(21) Anmeldenummer: 16157877.8
(22) Anmeldetag: 29.02.2016
(51) Int. Cl.: H02K 1/24, H02K 1/30

(54) **ROTOR FÜR EINE SYNCHRONMASCHINE**

(71) Anmelder: Siemens Aktiengesellschaft, 80333 München (DE)
(72) Erfinder: Schmidt, Stefan, 16321 Bernau OT Schönow (DE); Ulbrich, Benjamin Gottfried, 10439 Berlin (DE); Wieschalla, Martin, 12305 Berlin (DE)

(57) **Zusammenfassung**

Die Erfindung betrifft einen Rotor (3) für eine Synchronmaschine (1) mit einer Welle (5) und mindestens einem Polschuh (7), die aus einem ersten Material (10) gebildet sind. Um bei einem geringen Aufwand und niedrigen Kosten eine höhere Zuverlässigkeit zu erreichen, wird vorgeschlagen, dass sich zwischen der Welle (5) und dem Polschuh (7) ein Blech (8) aus einem zweiten Material (11) befindet, wobei das Blech (8) eine erste Kontaktfläche (12) und eine zweite Kontaktfläche (13) aufweist, wobei die erste Kontaktfläche (12) mit einer Kontaktfläche (14) des Polschuhs (7) kontaktiert ist, wobei die zweite Kontaktfläche (13) mit einer Kontaktfläche (15) der Welle (5) kontaktiert ist.

## Beschreibung

Die Erfindung betrifft einen Rotor für eine Synchronmaschine mit einer Welle und mindestens einem Polschuh, die aus einem ersten Material gebildet sind.

Die Erfindung betrifft weiterhin eine Synchronmaschine mit einem derartigen Rotor.

Ferner betrifft die Erfindung ein Verfahren zur Herstellung eines derartigen Rotors.

Ein derartiger Rotor kommt insbesondere bei direktanlaufenden Synchron-Schenkelpolmaschinen mit aufgesetzten Polschuhen zum Einsatz. Aufgesetzte Polschuhe kommen im Wesentlichen bei Großantrieben mit einer Leistung von mindestens 1 Megawatt vor. Zwischen dem Polschuh und der Welle, auf der der Polschuh aufgesetzt wird, bildet sich eine Teilfuge. Bei einem asynchronen Anlauf der Synchron-Schenkelpolmaschine, werden Wirbelströme in die aufgesetzten Polschuhe induziert, wobei insbesondere die Oberfläche der Polschuhe durch die Wirbelströme stark aufgeheizt wird. Im Zuge der Durchwärmung dehnen sich die Polschuhe aus. Die daraus resultierende Querkraft in der Teilfuge wird vornehmlich reibschlüssig gehalten. Wird die Haftreibung überwunden, kommt es zu wärmeinduzierte Relativverschiebung in der Teilfuge zwischen Polschuh und Welle. Eine derartige Relativverschiebung erfolgt zumeist sprunghaft und willkürlich. Die damit einhergehenden Masseverschiebungen wirken sich negativ auf den Wuchtzustand des Rotors aus und gefährden letztlich den Betrieb des Motors.

Die Polschuhe werden bevorzugt mit der Welle durch Schrauben verbunden. Die Haftreibung in der Teilfuge zwischen Polschuh und Welle wird daher von den Vorspannkräften und den Reibwerten bestimmt. Insbesondere die Reibwerte lassen sich durch gezielte Änderung der Materialeigenschaften und Oberflächeneigenschaften der Reibpartner beeinflussen. Aber eine direkte Modifikation der Materialeigenschaften und Oberflächeneigenschaften an den Kontaktflächen ist nur begrenzt möglich, da sich Änderungen am Grundwerkstoff global auf die funktionalen Eigenschaften der Bauteile auswirken. Für lokale Änderungen der Eigenschaften wären Werkzeuge und Maschinen, wie Fräsmaschinen, Öfen, Tauchbäder usw., in entsprechender Größe erforderlich. Folglich ist eine direkte Bearbeitung der Kontaktflächen mit großem technischem und finanziellem Aufwand verbunden.

Aus dem Patent US 9,077,223 B2 ist eine elektrische rotierende Maschine mit einem Schenkelpolläufer bekannt, welcher Polkörper aufweist. Die Polkörper sind einstückig aus einer Welle ausgebildet. Die Polschuhe bilden Polköpfe. Jeder Polschuh ist mit einer Vielzahl von Schrauben fest an dem zugehörigen Polkörper verbunden. Jeder Polschuh oder sein entsprechender Polkörper weisen zumindest einem Vorsprung oder eine Ausnehmung auf, um einen kegelförmigen Druckbereich in einem Druckbereich zu begrenzen. Ein kegelförmiger Druckbereich in einem Druckbereich tritt auf, wenn der Polschuh mit den Schrauben an dem entsprechenden Polkörper verbunden ist.

Der Erfindung liegt die Aufgabe zugrunde, einen Rotor für eine Synchronmaschine anzugeben, welche, im Vergleich zum Stand der Technik, eine höhere Zuverlässigkeit aufweist und dabei einfach und kostengünstig herzustellen ist.

Diese Aufgabe wird erfindungsgemäß durch einen Rotor für eine Synchronmaschine mit einer Welle und mindestens einem Polschuh, die aus einem ersten Material gebildet sind, gelöst, wobei sich zwischen der Welle und dem Polschuh ein Blech aus einem zweiten Material befindet, wobei das Blech eine erste Kontaktfläche und eine zweite Kontaktfläche aufweist, wobei die erste Kontaktfläche mit einer Kontaktfläche des Polschuhs kontaktiert ist und wobei die zweite Kontaktfläche mit einer Kontaktfläche der Welle kontaktiert ist.

Die Aufgabe wird weiterhin durch eine Synchronmaschine mit einem derartigen Rotor gelöst.

Weiterhin wird die Aufgabe mit einem Verfahren zur Herstellung eines Rotors für eine Synchronmaschine gelöst, welcher eine Welle und einen Polschuh aus einem ersten Material und ein Blech aus einem zweiten Material aufweist, wobei das Blech eine erste Kontaktfläche und eine zweite Kontaktfläche aufweist, wobei das Blech zwischen dem Polschuh und der Welle derartig eingelegt wird, dass die erste Kontaktfläche mit einer Kontaktfläche des Polschuhs verbunden wird und dass die zweite Kontaktfläche mit einer Kontaktfläche der Welle kontaktiert wird.

Die in Bezug auf den Rotor nachstehend angeführten Vorteile und bevorzugten Ausgestaltungen lassen sich sinngemäß auf das Verfahren übertragen.

Durch das Einsetzen eines Bleches in die Teilfuge zwischen der Welle und dem Polschuh (das Blech wird weiterhin auch Teilfugenblech genannt) kann beispielsweise eine lokale Modifikation der Materialeigenschaften und/oder Oberflächeneigenschaften im Bereich der Kontaktflächen des Blechs, bevorzugt hinsichtlich der Reibwerte, vorgenommen werden, ohne Änderungen an dem Polschuh und an der Welle selbst durchführen zu müssen. Durch eine derartige Modifikation der Materialeigenschaften und/oder Oberflächeneigenschaften wird eine wärmeinduzierte Relativverschiebung zwischen Polschuh und Welle einfach und kostengünstig vermieden. Durch die Verwendung eines derartigen Rotors wird die Zuverlässigkeit, insbesondere im Betrieb mit asynchronem Anlauf, verbessert.

Bevorzugt weist zumindest die erste Kontaktfläche des Blechs eine größere Oberflächenrauigkeit als die Kontaktfläche der Welle und/oder die Kontaktfläche des Polschuhs auf. Durch eine größere Oberflächenrauigkeit wird der Haftreibungskoeffizient zwischen den Kontaktflächen erhöht, wodurch eine Relativverschiebung erschwert wird.

Zweckdienlicherweise weist zumindest die erste Kontaktfläche des Blechs eine Oberflächenrauigkeit von mehr als 25 µm auf. Eine derartige Oberflächenrauigkeit kann beispielsweise durch Raustrahlen erreicht werden. Erfahrungsgemäß hat sich eine derartige Oberflächenrauigkeit als besonders vorteilhaft erwiesen.

Bei einer bevorzugten Ausführungsform ist die erste Kontaktfläche des Blechs vollflächig mit der Kontaktfläche des Polschuhs kontaktiert. Durch die Maximierung der Kontaktfläche werden der magnetische Fluss und die thermische Kontaktierung des Polschuhs an der Welle optimiert.

In besonders vorteilhafter Weise ist das zweite Material härter als das erste Material. Dies ist vorteilhaft, da sich beispielsweise das bevorzugt aufgeraute Blech aus dem härteren zweiten Material mit dem weicheren ersten Material des Polschuhs und/oder der Welle bei entsprechendem Anpressdruck verklammert wodurch eine Relativverschiebung zwischen den kontaktierten Flächen erschwert wird.

Bei einer weiteren vorteilhaften Ausgestaltung weist das Blech eine Dicke von mindestens 2 mm auf. Erfahrungsgemäß hat sich eine derartige Dicke als besonders vorteilhaft erwiesen.

Vorzugsweise ist das zweite Material ein Federstahl mit einer Härte von mindestens 650 HV. Es wird insbesondere ein gehärteter Federstahl des Typs C75S verwendet. Dies ist vorteilhaft, da die hohe Härte beispielsweise eine stabile Verklammerung ermöglicht.

Auf besonders vorteilhafte Weise ist das Blech im Bereich der zweiten Kontaktfläche über eine formschlüssige und/oder kraftschlüssige Verbindung, insbesondere über ein Verbindungselement, mit der Welle kontaktiert. Die Erwärmung, beispielsweise verursacht durch Wirbelströme bei einem asynchronen Anlauf, findet primär auf der Oberfläche der Polschuhe statt. Da sich die Welle nicht so stark erwärmt und sich deshalb nicht signifikant ausdehnt, kann das Blech mit der Welle beispielsweise über eine einfache und kostengünstige Schraubverbindung befestigt werden.

In besonders vorteilhafter Weise ist die zweite Kontaktfläche des Blechs über eine stoffschlüssige Verbindung, insbesondere über eine Schweißverbindung, mit der Welle verbunden. Beispielsweise wird das Blech über ein Diffusionsschweißverfahren mit der Welle verbunden. Dies ist vorteilhaft, da eine derartige Schweißverbindung eine große mechanische und thermische Stabilität aufweist.

Im Folgenden wird die Erfindung anhand der in den Figuren dargestellten Ausführungsbeispiele näher beschrieben und erläutert.

Es zeigen:
- FIG 1: eine dreidimensionale Darstellung einer ersten Ausführungsform eines Rotors,
- FIG 2: einen Querschnitt einer ersten Ausführungsform eines Rotors,
- FIG 3: einen vergrößerten Ausschnitt einer zweiten Ausführungsform eines Rotors im Querschnitt,
- FIG 4: einen vergrößerten Ausschnitt einer dritten Ausführungsform eines Rotors im Querschnitt und
- FIG 5: einen Querschnitt einer Synchronmaschine.

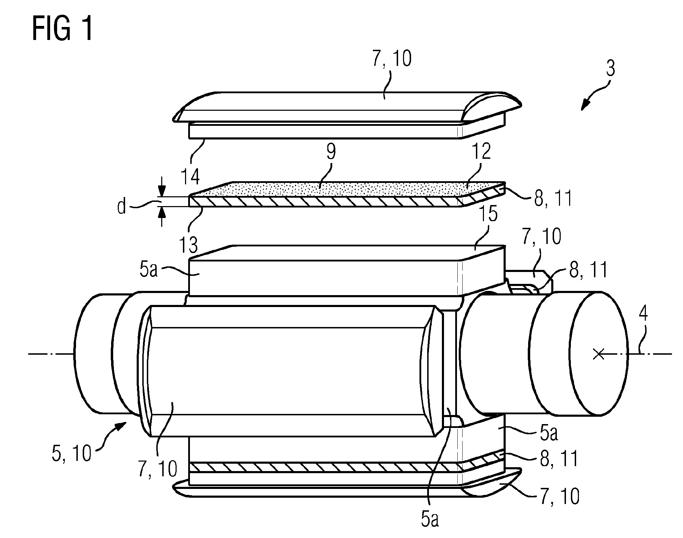

Gleiche Bezugszeichen haben in verschiedenen Figuren die gleiche Bedeutung. FIG 1 zeigt eine dreidimensionale Darstellung einer ersten Ausführungsform eines Rotors 3. Der Rotor 3 ist um eine Rotationsachse 4 rotierbar, wobei die Rotationsachse 4 eine axiale Richtung und eine radiale Richtung definiert. Der Rotor 3, welcher für eine direktanlaufende Synchron-Schenkelpolmaschine mit einer Maximalleistung von mindestens 1 Megawatt geeignet ist, weist exemplarisch vier orthogonal angeordnete Schenkelpole 5a auf. Die Welle 5 mit den vier Schenkelpolen 5a ist aus einem massiven Vollmaterial hergestellt und besteht, wie die Polschuhe 7, aus einem ersten Material 10, bevorzugt aus einem weichmagnetischen Stahl.

Zwischen dem Polschuh 7 und der Welle 5 befindet sich jeweils ein Blech 8, welches auch Teilfugenblech genannt wird und in axiale Richtung parallel zur Rotationsachse 4 verläuft. Das Blech 8 weist eine erste Kontaktfläche 12 und eine zweite Kontaktfläche 13 auf, wobei im gezeigten Ausführungsbeispiel die erste Kontaktfläche 12 vollflächig auf einer Kontaktfläche 14 des Polschuhs 7 aufliegt und wobei die zweite Kontaktfläche 13 vollflächig auf einer Kontaktfläche 15 der Welle 5 aufliegt. Das Blech 8 weist eine näherungsweise konstante Dicke von 5 mm auf und besteht aus einem zweiten Material 11, welches härter als das erste Material 10 ist. Bevorzugt wird als zweites Material 11 ein gehärteter Federstahl C75s mit einer Härte im Bereich von 700 HV verwendet.

Die Polschuhe 7 werden mit Hilfe von als Schrauben ausgeführten Verbindungselementen 16 auf Welle 5 geschraubt, wobei das Blech 8 zwischen der Welle 5 und den Polschuhen 7 aufliegt und wobei die Schrauben durch das Blech 8 verlaufen. Die Schrauben sowie für den Betrieb des Rotors 3 erforderliche Polwicklungen sind aus Gründen der Übersichtlichkeit nicht dargestellt.

Bei einem asynchronen Anlauf werden Wirbelströme in die Polschuhe 7 induziert, wobei insbesondere die Oberfläche der Polschuhe 7 durch die Wirbelströme stark aufgeheizt wird, wodurch sich der Polschuh 7 ausdehnt. Um eine von der Ausdehnung verursachte Verschiebung des Polschuhs 7 zur Welle zu vermeiden, weisen die Kontaktflächen 12, 13 des Blechs 8 eine Aufrauhung 9 auf, wobei die Oberflächenrauigkeit der Kontaktflächen 12, 13 im Bereich von 60 µm bis 80 µm liegt. Durch die größere Oberflächenrauigkeit wird der Haftreibungskoeffizient zwischen den sich berührenden Kontaktflächen 12, 14; 13, 15 erhöht. Eine derartige Aufrauhung 9 wird beispielsweise mittels Raustrahlen mit einem Strahlgut, beispielsweise mit Partikel, erreicht. Alternativ können die Kontaktflächen 12, 13 durch Schleifen, Prägen, Rändeln und/oder Fräsen derartig strukturiert werden, dass sich der Haftreibungskoeffizient zwischen den sich berührenden Kontaktflächen 12, 14; 13, 15 erhöht.

Die aufgerauten Kontaktflächen 12, 13 des Blechs 8 aus dem härteren zweiten Material 11 verklammern sich durch einen entsprechenden Anpressdruck, welcher durch die Verschraubung hergestellt wird, mit dem weicheren ersten Material 12 des Polschuhs 7 und der Welle 5.

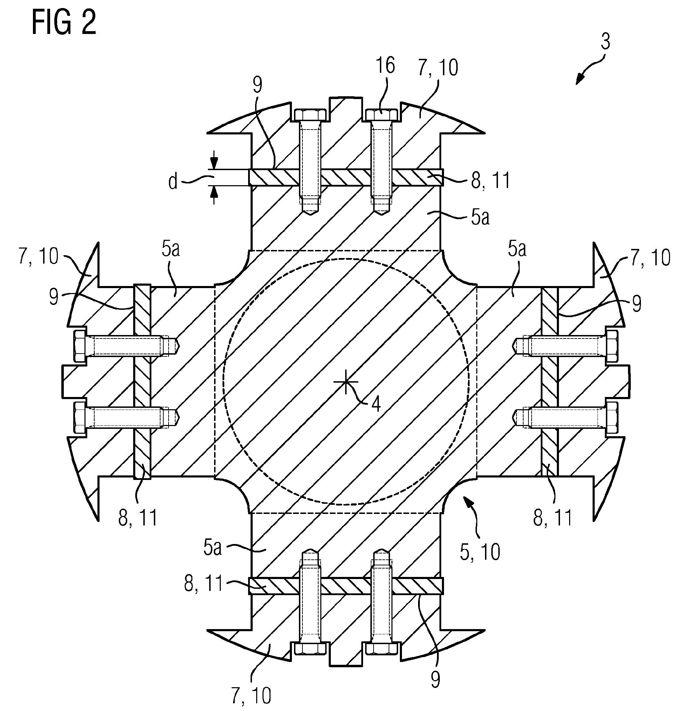

FIG 2 zeigt einen Querschnitt einer ersten Ausführungsform eines Rotors 3. Es sind Verbindungselemente 16, insbesondere Schrauben, dargestellt, welche in radiale Richtung durch die Bleche 8 verlaufen und die Polschuhe 7 zusammen mit den Blechen 8 an der Welle 5 befestigen. Die übrige Ausführung des Rotors 3 entspricht der aus FIG 1.

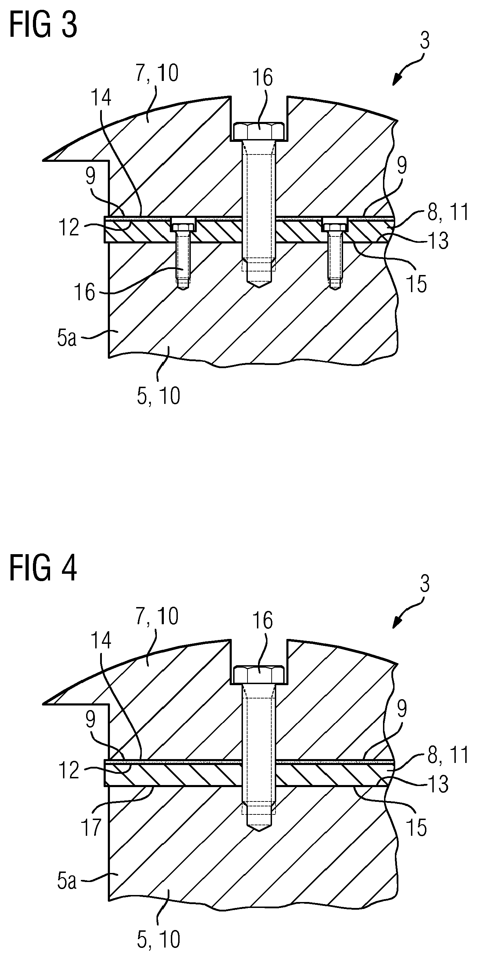

FIG 3 zeigt einen vergrößerten Ausschnitt einer zweiten Ausführungsform eines Rotors 3 im Querschnitt. Die erste Kontaktfläche 12 des Blechs 8 weist, wie in FIG 1 beschrieben eine Aufrauhung 9 auf, um die Reibung zwischen dem Blech 8 und dem Polschuh 7 zu erhöhen. Mit der Welle 5 hingegen ist das Blech 8 über Verbindungselemente 16, insbesondere Schrauben, verbunden, sodass die zweite Kontaktfläche 13 auf der Kontaktfläche 15 der Welle 5 aufliegt. Die übrige Ausführung des Rotors 3 entspricht der aus FIG 1.

FIG 4 zeigt einen vergrößerten Ausschnitt einer dritten Ausführungsform eines Rotors 3 im Querschnitt. Die Ausführungsform in FIG 4 unterscheidet sich von der Ausführungsform in FIG 3 dadurch, dass die zweite Kontaktfläche 13 über eine stoffschlüssige Verbindung 17 mit der Kontaktfläche 15 der Welle 5 verbunden ist. Eine derartige stoffschlüssige Verbindung 17 wird bevorzugt über eine Schweißverbindung, beispielsweise mittels Diffusionsschweißen, hergestellt.

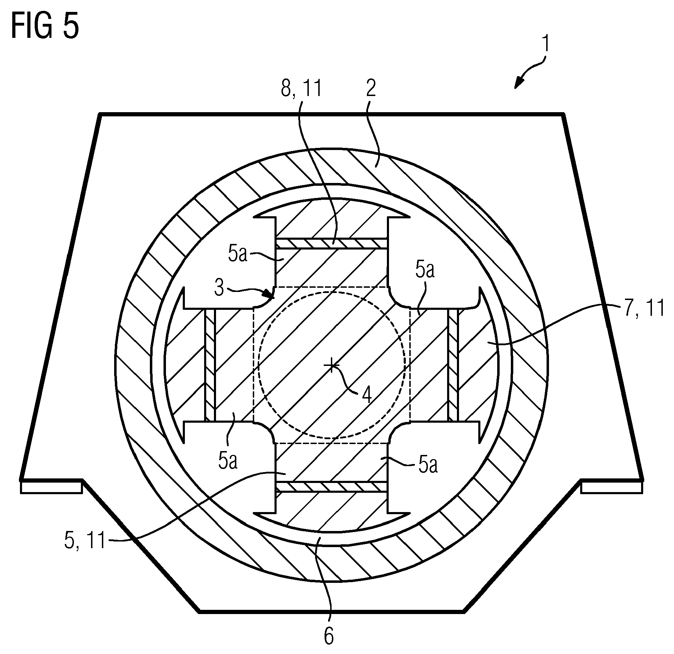

FIG 5 zeigt einen Querschnitt einer Synchronmaschine 1. Die Synchronmaschine 1, welche mit einer Leistung von mindestens 1 Megawatt betreibbar ist, weist einen Rotor 3 gemäß einer der vorherigen Figuren auf. Weiterhin weist die Synchronmaschine 1 einen den Rotor 3 umgebenden Stator 2 auf, wobei sich zwischen dem Rotor 3 und dem Stator 2 ein Luftspalt 6 befindet. Die Spulen des Stators 2 und des Rotors 3 sind aus Gründen der Übersichtlichkeit nicht dargestellt.

Zusammenfassend betrifft die Erfindung einen Rotor 3 für eine Synchronmaschine 1 mit einer Welle 5 und mindestens einem Polschuh 7, die aus einem ersten Material 10 gebildet sind. Um bei einem geringen Aufwand und niedrigen Kosten eine höhere Zuverlässigkeit zu erreichen, wird vorgeschlagen, dass sich zwischen der Welle 5 und dem Polschuh 7 ein Blech 8 aus einem zweiten Material 11 befindet, wobei das Blech 8 eine erste Kontaktfläche 12 und eine zweite Kontaktfläche 13 aufweist, wobei die erste Kontaktfläche 12 mit einer Kontaktfläche 14 des Polschuhs 7 kontaktiert ist, wobei die zweite Kontaktfläche 13 mit einer Kontaktfläche 15 der Welle 5 kontaktiert ist.

## Patentansprüche

1. Rotor (3) für eine Synchronmaschine (1) mit einer Welle (5) und mindestens einem Polschuh (7), die aus einem ersten Material (10) gebildet sind,
**dadurch gekennzeichnet, dass** sich zwischen der Welle (5) und dem Polschuh (7) ein Blech (8) aus einem zweiten Material (11) befindet,
wobei das Blech (8) eine erste Kontaktfläche (12) und eine zweite Kontaktfläche (13) aufweist,
wobei die erste Kontaktfläche (12) mit einer Kontaktfläche (14) des Polschuhs (7) kontaktiert ist,
wobei die zweite Kontaktfläche (13) mit einer Kontaktfläche (15) der Welle (5) kontaktiert ist.

2. Rotor (3) nach Anspruch 1,
wobei zumindest die erste Kontaktfläche (12) des Blechs (8) eine größere Oberflächenrauigkeit als die Kontaktfläche (15) der Welle (5) und/oder die Kontaktfläche (14) des Polschuhs (7) aufweist.

3. Rotor (3) nach einem der Ansprüche 1 oder 2,
wobei zumindest die erste Kontaktfläche (12) des Blechs (8) eine Oberflächenrauigkeit von mehr als 25 µm aufweist.

4. Rotor (3) nach einem der Ansprüche 1 bis 3,
wobei die erste Kontaktfläche (12) des Blechs (8) vollflächig mit der Kontaktfläche (14) des Polschuhs (7) kontaktiert ist.

5. Rotor (3) nach einem der Ansprüche 1 bis 4,
wobei das zweite Material (11) härter als das erste Material (10) ist.

6. Rotor (3) nach einem der Ansprüche 1 bis 5,
wobei das Blech (8) eine Dicke (d) von mindestens 2 mm aufweist.

7. Rotor (3) nach einem der Ansprüche 1 bis 6,
wobei das zweite Material (11) ein Federstahl mit einer Härte von mindestens 650 HV ist.

8. Rotor (3) nach einem der Ansprüche 1 bis 7,
wobei das Blech (8) im Bereich der zweiten Kontaktfläche (13) über eine formschlüssige und/oder kraftschlüssige Verbindung, insbesondere über ein Verbindungselement (16), mit der Welle (5) kontaktiert ist.

9. Rotor (3) nach einem der Ansprüche 1 bis 7,
wobei die zweite Kontaktfläche (13) des Blechs (8) über eine stoffschlüssige Verbindung (17), insbesondere über eine Schweißverbindung, mit der Welle (5) verbunden ist.

10. Synchronmaschine (1) mit einem Rotor (3) nach einem der Ansprüche 1 bis 9.

11. Verfahren zur Herstellung eines Rotors (3) für eine Synchronmaschine (1),
wobei die Synchronmaschine (1) eine Welle (5) und einen Polschuh (7) aus einem ersten Material (10) und ein Blech (8) aus einem zweiten Material (11) aufweist,
wobei das Blech (8) eine erste Kontaktfläche (12) und eine zweite Kontaktfläche (13) aufweist,
wobei das Blech (8) zwischen dem Polschuh (7) und der Welle (5) derartig eingelegt wird,
dass die erste Kontaktfläche (12) mit einer Kontaktfläche (14) des Polschuhs (7) kontaktiert wird und
dass die zweite Kontaktfläche (13) mit einer Kontaktfläche (15) der Welle (5) kontaktiert wird.

12. Verfahren nach Anspruch 11,
wobei zumindest die erste Kontaktfläche (12) des Blechs (8) eine größere Oberflächenrauigkeit als die Kontaktfläche (15) der Welle (5) und/oder die Kontaktfläche (14) des Polschuhs (7) aufweist und dabei derart zwischen der Welle (5) und dem Polschuh (7) eingelegt wird, dass sie auf der Kontaktfläche (14) des Polschuhs (7) aufliegt.

13. Verfahren nach einem der Ansprüche 11 oder 12,
wobei ein Blech eingesetzt wird, welches eine erste Kontaktfläche (12) mit einer Oberflächenrauigkeit größer als 25 µm aufweist.

14. Verfahren nach einem der Ansprüche 11 bis 13,
wobei die erste Kontaktfläche (12) des Blechs (8) vollflächig mit der Kontaktfläche (14) des Polschuhs (7) kontaktiert wird.

15. Verfahren nach einem der Ansprüche 11 bis 14,
wobei das zweite Material (11) härter als das erste Material (10) gewählt wird.

16. Verfahren nach einem der Ansprüche 11 bis 15,
wobei das Blech (8) im Bereich der zweiten Kontaktfläche (13) über eine formschlüssige und/oder kraftschlüssige Verbindung, insbesondere über ein Verbindungselement (16), mit der Welle (5) kontaktiert wird.

17. Verfahren nach einem der Ansprüche 11 bis 16,
wobei die zweite Kontaktfläche (13) des Blechs (8) über eine stoffschlüssige Verbindung (17), insbesondere über eine Schweißverbindung, mit der Welle (5) verbunden wird.
